(19) Europäisches Patentamt
European Patent Office
Office européen des brevets

(11) Veröffentlichungsnummer: **0 004 062**
**B1**

# (12) EUROPÄISCHE PATENTSCHRIFT

(45) Veröffentlichungstag der Patentschrift: **16.12.81**

(51) Int. Cl.³: **C 08 F 2/26,** D 21 H 1/28, C 09 J 3/14

(21) Anmeldenummer: **79100664.6**

(22) Anmeldetag: **06.03.79**

(54) **Wässrige Kunststoffdispersion auf Basis von Vinylpolymeren, Verfahren zu ihrer Herstellung und ihre Verwendung.**

(30) Priorität: **10.03.78 DE 2810348**

(43) Veröffentlichungstag der Anmeldung: **19.09.79 Patentblatt 79/19**

(45) Bekanntmachung des Hinweises auf die Patenterteilung: **16.12.81 Patentblatt 81/50**

(84) Benannte Vertragsstaaten: **BE CH DE FR GB IT LU NL SE**

(56) Entgegenhaltungen:
**US-A-3 341 340**
**US-A-3 484 395**

(73) Patentinhaber: **HOECHST AKTIENGESELLSCHAFT, Postfach 80 03 20, D-6230 Frankfurt/Main 80 (DE)**

(72) Erfinder: **Nölken, Ernst, Dr., Dachbergstrasse 16a, D-6232 Bad Soden am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

## Wäßrige Kunststoffdispersion auf Basis von Vinylpolymeren, Verfahren zu ihrer Herstellung und ihre Verwendung

Es ist bekannt, daß Vinylpolymere durch Emulsionspolymerisation in Gegenwart von oberflächenaktiven Verbindungen hergestellt werden können; die erhaltenen Latices sind allerdings in aller Regel instabil, wenn sie keine weiteren Stabilisatoren enthalten. Durch Verwendung größerer Mengen von anionisch wirksamen Emulgatoren kann zwar die Stabilität des Latex gegen mechanische Beanspruchung wie Pumpen und Rühren erhöht werden, aber gleichzeitig wird dadurch die Thermostabilität der Polymeren oder die Wasserfestigkeit des aus dem Latex erhaltenen Films verschlechtert. Ähnliches gilt für die zusätzliche Verwendung von Schutzkolloiden oder Copolymeren von ungesättigten Säuren.

Ferner ist bekannt, daß geringe Mengen von Aminotrimethylphosphonsäure oder deren Alkalimetallsalzen bei der Herstellung von wäßrigen Kaolin-Suspensionen als Dispergierhilfsmittel dienen, die in Kombination mit kondensierten Phosphaten wie Natriumhexametaphosphat eingesetzt werden (vgl. US-Patentschrift 3 341 340). Weiterhin ist beschrieben, daß bei der Herstellung von wäßrigen Polymer-Dispersionen, die zur Papierbeschichtung dienen sollen, Alkalimetallsalze von Alkylphenylpolyphosphatestern als oberflächenaktive Mittel verwendet werden (vgl. US-Patentschrift 3 484 395).

Aufgabe der Erfindung ist die Schaffung einer wäßrigen Kunststoffdispersion mit niedriger Viskosität und hohem Pigmentbindevermögen, die als Bindemittel, z. B. für Papierstreichmassen, geeignet ist.

Die Erfindung betrifft eine wäßrige Kunststoffdispersion auf Basis von Vinypolymeren, dadurch gekennzeichnet, daß sie ein wasserlösliches Salz eines mehrbasigen Phosphonsäure-Derivats mit 2, 3 oder 4 Phosphoratomen enthält.

Die Erfindung betrifft ferner ein Verfahren zur Herstellung einer wäßrigen Kunststoffdispersion durch Polymerisieren mindestens eines Vinylmonomers in wäßriger Dispersion in Gegenwart eines Emulgators unter an sich bekannten Bedingungen, das dadurch gekennzeichnet ist, daß die Polymerisation in Gegenwart eines wasserlöslichen Salzes eines mehrbasigen Phosphonsäure-Derivats mit 2, 3 oder 4 Phosphoratomen durchgeführt wird.

Als Phosphonsäure-Derivate werden vor allem Diphosphonoalkane, die vorzugsweise 1 bis 8 und insbesondere 1 bis 4 Kohlenstoffatome aufweisen, und Phosphonomethyl-amine eingesetzt, die 1 oder 2 Stickstoffatome aufweisen.

Bevorzugt anwendbar sind Salze von Alkanphosphonsäuren der Formel (I)

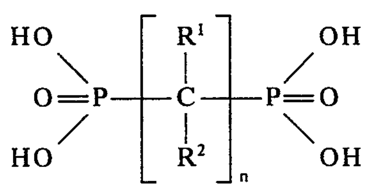

(I)

in der $R^1$ ein Wasserstoffatom oder einen Alkylrest mit 1 bis 8 Kohlenstoffatomen, $R^2$ ein Wasserstoffatom, eine Hydroxylgruppe oder einen Alkylrest mit 1 bis 8 Kohlenstoffatomen und n eine ganze Zahl von 1 bis 10, vorzugsweise 1, 2 oder 3, bedeuten. Die vorgenannten Alkylreste sind vorzugsweise Methyl- oder Äthylreste. Besonders geeignete Verbindungen der Formel (I) sind beispielsweise Methan-diphosphonsäure, Äthan-1,1-diphosphonsäure, Äthan-1,2-diphosphonsäure, n-Propan-1,3-diphosphonsäure, n-Butan-1,4-diphosphonsäure, n-Propan-1,1-diphosphonsäure, n-Propan-2,2-diphosphonsäure, 1-Hydroxyäthan-1,1-diphosphonsäure und 1-Hydroxy-n-propan-2,2-diphosphonsäure.

In gleicher Weise verwendbar sind Salze von Phosphonomethylaminen der Formel (II)

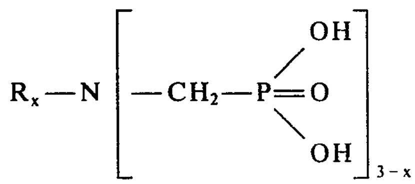

(II)

in der R einen Alkylrest mit 1 bis 6, vorzugsweise 1, 2 oder 3 Kohlenstoffatomen und x null oder 1 bedeuten. Der Alkylrest R ist insbesondere ein Methyl- oder Äthylrest. Besonders geeignete Verbindungen der Formel (II) sind beispielsweise Tris(phosphonomethyl)-amin, N-Methyl-N,N-bis(phosphonomethyl)-amin, N-Äthyl-N,N-bis(phosphonomethyl)-amin, N-Propyl-N,N-bis(phosphonomethyl)-amin, N-Butyl-N,N-bis(phosphonomethyl)-amin und N-Hexyl-N,N-bis(phosphonomethyl)-amin.

Ferner lassen sich Salze von Phosphonomethyl-aminen der Formel (III) verwenden,

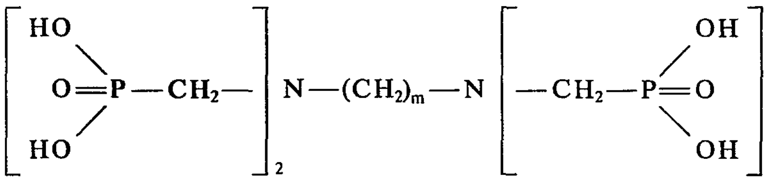

(III)

in der m eine ganze Zahl von 2 bis 14, vorzugsweise von 2 bis 6 bedeutet. Besonders geeignete Verbindungen der Formel (III) sind beispielsweise N,N,N',N'-Tetrakis(phosphonomethyl)-äthylendiamin, N,N,N',N'-Tetrakis(phosphonomethyl)-trimethylendiamin und die entsprechenden Derivate des Tetramethylendiamin und des Hexamethylendiamin.

Die erfindungsgemäß als Dispergierhilfsmittel verwendeten Salze von Phophonsäure-Derivaten müssen in Wasser löslich sein. Besonders geeignet sind Alkalisalze, z. B. Natriumsalze und Kaliumsalze, und Ammoniumsalze, d. h. Salze des Ammoniaks und Salze von primären, sekundären oder tertiären aliphatischen Aminen. Als aliphatische Amine eignen sich vorzugsweise Mono-, Di- und Trialkylamine, deren Alkylreste gleich oder verschieden sind und jeweils 1 bis 4 Kohlenstoffatome aufweisen und mit einem Hydroxylrest substituiert sein können. Beispielsweise seien genannt Methylamin, Äthylamin, Propylamin, Dimethylamin, Diäthylamin, Dipropylamin, Trimethylamin, Triäthylamin, Tripropylamin, Äthanolamin, Diäthanolamin, Triäthanolamin, N,N-Dimethylamino-äthanol und 2-Amino-2-methyl-propanol-(1). Ebenfalls verwendbar sind cyclische Amine, z. B. Piperidin, Morpholin und Piperaziun, sowie lineare Polyamine, z. B. Äthylendiamin, Diäthylentriamin und Triäthylentetramin.

Die Diphosphonomethyl-alkane der Formel (I) werden hergestellt durch Umsetzung von Dialkylphosphiten mit Dihalogenalkanen oder, im Falle der Diphosphonomethyl-hydroxialkane, durch Umsetzung von phosphoriger Säure mit den entsprechenden Carbonsäureanhydriden, vorzugsweise Acetanhydrid.

Die Phosphonomethyl-amine der Formeln (II) und (III) werden hergestellt durch Umsetzung von phosphoriger Säure mit Formaldehyd und Ammoniak oder Ammoniumchlorid oder den entsprechenden Aminen oder Diaminen in Anwesenheit von Chlorwasserstoff bei einer Temperatur von 50 bis 120° C, vorzugsweise von 80 bis 100° C.

Das wesentliche Merkmal des erfindungsgemäßen Herstellungsverfahrens ist die Durchführung der Polymerisation der Vinylmonomeren in Gegenwart eines Emulgators und mindestens eines als Dispergierhilfsmittel wirkenden Salzes eines Phosphonsäure-Derivats mit 2, 3 oder 4 Phosphoratomen. Das Salz kann dem Polymerisationsgemisch als solches zugesetzt werden, oder es kann in situ durch Neutralisation eines im Gemisch vorhandenen Phosphonsäure-Derivats gebildet werden. Die Neutralisation muß nicht immer vollständig sein, so daß auch saure Salze entstehen können. Als Neutralisationsmittel dienen basisch reagierende Verbindungen, insbesondere Alkalihydroxide, Alkalicarbonate, Ammoniak und Ammoniumcarbonat sowie die obengenannten primären, sekundären oder tertiären aliphatischen Amine. Die Menge des Neutralisationsmittels beträgt hierbei 0,1 bis 1,2 mol, vorzugsweise 0,3 bis 0,9 mol (bezogen auf 1 mol des Phosphonsäure-Derivats). Die Neutralisation wird vorzugsweise in wäßriger Lösung durchgeführt; deren pH-Wert beträgt im allgemeinen 2 bis 10, vorzugsweise 4 bis 8.

Das Phosphonsäure-Salz wird in einer Menge von 0,005 bis 5, vorzugsweise von 0,01 bis 2 Gewichtsprozent eingesetzt (bezogen auf die Gesamtmenge der Vinylmonomeren). Es kann vor Beginn der Polymerisation vorgelegt oder vorzugsweise teilweise vorgelegt und während der Polymerisation zudosiert werden. In einer besonderen Ausführungsform des Verfahrens werden 5 bis 30 Gewichtsprozent des Salzes vor Beginn der Polymerisation in wäßriger Lösung vorgelegt, 30 bis 55 Gewichtsprozent gleichzeitig mit der Dosierung der Vinylmonomeren zugegeben und 15 bis 65 Gewichtsprozent nach Beendigung der Monomerendosierung dem Reaktionsgemisch zudosiert. Die Salze werden einzeln eingesetzt oder in Kombination miteinander.

Das Phosphonsäure-Salz wird in Kombination mit bekannten, vorzugsweise anionischen, oberflächenaktiven Substanzen verwendet, z. B. Alkylsulfaten, Alkansulfonaten, Sulfobernsteinsäureestern und Natriumsalzen von oxäthylierten oder sulfatierten Alkoholen oder Alkylphnolen. Die Menge der oberflächenaktiven Substanz beträgt 0,1 bis 3 Gewichtsprozent, vorzugsweise 0,5 bis 2 Gewichtsprozent (bezogen auf die Gesamtmenge der Vinylmonomeren). Das Gewichtsverhältnis von oberflächenaktiver Substanz zu Phosphonsäure-Salz beträgt 10 : 1 bis 10 : 50, vorzugsweise 3 : 1 bis 1 : 1.

Im Rahmen der Erfindung sind alle in wäßriger Dispersion polymerisationsfähigen Vinylmonomeren, d. h. olefinisch umgesättigte Verbindungen, geeignet, vor allem Verbindungen der Formel

$$H_2C{=}CH{-}R^4 \qquad (V)$$

in der $R^4$ ein Wasserstoffatom, einen Alkylrest mit 1 bis 4 Kohlenstoffatomen, einen Alkoxyrest mit 1 bis 4 Kohlenstoffatomen, einen Alkylcarboxyrest mit 2 bis 12, vorzugsweise 2 bis 10 Kohlenstoffatomen, eine Nitrilgruppe, ein Halogenatom, vorzugsweise ein Chloratom, einen Phenylrest oder einen

Alkoxycarbonylrest mit 2 bis 12, vorzugsweise 2 bis 9 Kohlenstoffatomen bedeutet. Anstatt eines einzelnen Vinylmonomeren kann auch ein Gemisch mehrerer Vinylmonomerer verwendet werden.

Geeignete Vinylmonomere sind insbesondere Olefine, z. B. Äthylen und Isobutylen, Vinyläther, z. B. Vinylmethyläther, Vinyläthyläther und Vinyl-n-butyläther, Vinylester von aliphatischen Monocarbonsäuren, z. B. Vinylacetat, Vinylpropionat, Vinylbutyrat, Vinyllaurat und Vinyldecanate, ferner Vinylidenchlorid, Acrylnitril, Vinylchlorid, Styrol, Acrylsäureester von einwertigen Alkanolen, z. B. Methylacrylat, Äthylacrylat, Butylacrylat und 2-Äthylhexylacrylat, sowie Methacrylsäureester von einwertigen Alkanolen, z. B. Methylmethacrylat, Äthylmethacrylat, Butylmethacrylat und 2-Äthylhexylmethacrylat. Vorzugsweise wird ein Vinylester verwendet, gegebenenfalls zusammen mit einem oder zwei weiteren Vinylmonomeren.

Die Polymerisation der jeweiligen Vinylmonomeren erfolgt unter an sich bekannten Bedingungen in Gegenwart eines radikalbildenden Initiators, vorzugsweise einer Peroxiverbindung oder einer aliphatischen Azoverbindung; geeignete Initiatoren sind beispielsweise die Alkali- oder Ammoniumsalze der Peroxidischwefelsäure oder der Peroxidiphosphorsäure sowie Azo- $\gamma,\gamma'$-bis(4-cyanvaleriansäure). Der Initiator wird in einer Menge von 0,05 bis 1, vorzugsweise von 0,1 bis 0,4 Gewichtsprozent, bezogen auf die Gesamtmenge der Vinylmonomeren, eingesetzt. Gegebenenfalls wird der Initiator zusammen mit einem Reduktionsmittel verwendet, z. B. mit einem Alkalisulfit, Alkalithiosulfat, Alkalidithionit, Formaldehydnatriumsulfoxylat oder einem Schwermetallsalz. Der Initiator kann vor Beginn der Polymerisation vorgelegt oder dem Polymerisationsgemisch zudosiert werden; das Gleiche gilt für das Reduktionsmittel. Die Polymerisation wird bei einer Temperatur von 25 bis 90° C, vorzugsweise von 40 bis 75° C durchgeführt; die Polymerisationszeit beträgt 2 bis 10, vorzugsweise 3 bis 8 Stunden, je nach Art und Menge der Vinylmonomeren.

Die erfindungsgemäße Kunststoffdispersion kann auch Zusatzmittel enthalten, die die Viskosität, das Netz- und Dispergiervermögen, die Gefrier- und Elektrolytstabilität und das Schaumverhalten günstig beeinflussen. Die Menge der Zusatzmittel beträgt im allgemeinen insgesamt höchstens 10 Gewichtsprozent, vorzugsweise 1 bis 5 Gewichtsprozent, bezogen auf die Kunststoffdispersion.

Als Verdickungsmittel dienen Cellulosederivate, z. B. Methyl-, Hydroxiäthyl-, Hydroxipropyl- und Carboximethylcellulose, Poly(vinylalkohol), Poly(vinylpyrrolidon), Poly(äthylenglykol), Salze der Poly(acrylsäure) und Salze von Acrylsäure/Acrylamid-Copolymeren.

Als Netz- und Dispergiermittel eignen sich Natriumpolyphosphat, Salze niedermolekularer Poly(acrylsäure), Salze der Poly(äthensulfonsäure), Salze der Poly(vinylphosphonsäure), Salze der Poly(maleinsäure) und Salze von Copolymeren der Maleinsäure mit Äthylen, 1-Olefinen mit 3 bis 18 Kohlenstoffatomen, Vinylalkyläthern mit 3 bis 14 Kohlenstoffatomen und/oder Styrol.

Zur Erhöhung der Gefrier- und Elektrolytstabilität können der Dispersion monomere und polymere 1,2-Diole, z. B. Glykol, Propylenglykol-(1,2) und Butylenglykol-(1,2), oder oxäthylierte Verbindungen zugesetzt werden, z. B. Umsetzungsprodukte von Äthylenoxid mit langkettigen Alkanolen, Aminen, Carbonsäuren, Carbonsäureamiden, Alkylphenolen, Poly(propylenglykol) oder Poly(butylenglykol).

Die minimale Filmbildetemperatur (Weißpunkt) der Kunststoffdispersion kann erniedrigt werden durch Zusatz von Lösungsmitteln, z. B. Äthylglykol, Butylglykol, Äthylglykolacetat, Äthyldiglykolacetat, Butylglykolacetat, Butyldiglykolacetat, Benzin oder alkylierte Aromaten. Als Entschäumungsmittel sind beispielsweise Poly(propylenglykol) und Polysiloxane geeignet.

Die erfindungsgemäße Kunststoffdispersion weist einen Feststoffgehalt von 40 bis 65 Gewichtsprozent, vorzugsweise von 45 bis 55 Gewichtsprozent auf. Die minimale Filmbildetemperatur der Dispersion liegt im Bereich von −10 bis 30° C, vorzugsweise von 0 bis 20° C, und die Viskosität beträgt 10 bis 1000 mPa · s, vorzugsweise 30 bis 400 mPa · s (gemessen nach Epprecht). Die Dispersion hat einen pH-Wert von 3,5 bis 9,0, vorzugsweise von 4,5 bis 8,0. Der mittlere Durchmesser der dispergierten Polymerpartikel beträgt 0,05 bis 5,0 µm, vorzugsweise 0,08 bis 2,0 µm. Die reduzierte spezifische Viskosität $\eta_{spec}/c$ der Polymeren liegt im Bereich von 1 bis 30 dl/g, vorzugsweise von 2 bis 20 dl/g (gemessen in Dimethylformamid bei einer Temperatur von 20° C). Die Dispersion findet Anwendung als Überzugsmittel sowie als Mittel zum Imprägnieren, Beschichten und Verkleben von natürlichen oder synthetischen Materialien, z. B. Holz, Papier, Metalle, Textilien und Kunststoffe. Sie ist besonders geeignet als Bindemittel für Pigmente und Füllstoffe in Dispersionsfarben und in Papierstreichmassen. Die Kunststoffdispersion ist vor allem dadurch ausgezeichnet, daß sie durch Schwermetallionen, insbesondere Eisenionen, nicht verfärbt wird und eine gute Lagerstabilität aufweist.

Die Erfindung wird durch die folgenden Beispiele näher erläutert. Die Angaben »Teile« und »%« bedeuten hierbei jeweils »Gewichtsteile« und »Gewichtsprozent«, wenn nicht anders bezeichnet.

Die in den Beispielen verwendeten Abkürzungen haben folgende Bedeutungen:

| | |
|---|---|
| VA: | Vinylacetat |
| VC: | Vinylchlorid |
| ET: | Äthylen |
| MMOE: | Maleinsäure-mono-(2-äthyl-hexyl)-ester |
| NaLS: | Natrium-laurylsulfat |
| NaDBS: | Natrium-dodecylsulfat |

| | |
|---|---|
| PPG: | Polypropylenglykol |
| HEDP: | 1-Hydroxyäthan-1,1-diphosphonsäure |
| TPMA: | Tris(phosphonomethyl)-amin |
| TPMEA: | N,N,N',N',-Tetrakis(phosphonomethyl)-äthylendiamin |
| TPMHA: | N,N,N',N'-Tetrakis(phosphonomethyl)-hexamethylendiamin |
| MDP: | Methan-diphosphonsäure |
| RSV: | reduzierte spezifische Viskosität $\eta_{spec}/c$ |
| MFT: | minimale Filmbildetemperatur |

## Beispiel 1

In einen Rührautoklav werden 10 000 Teile elektrolytfreies Wasser mit Vakuum eingezogen, und das Wasser wird unter Rühren mit Stickstoff gespült. Dann werden 20 bar Äthylen in den Autoklav gedrückt, und die Innentemperatur wird auf 45° C eingestellt. Nun werden 25% einer Lösung (I) von 19 Teilen Natriumsulfit, 180 Teilen Natriumlaurylsulfat und 60 Teilen Tris(phosphonomethyl)-amin in 2000 Teilen Wasser, die mit konzentrierter wäßriger Ammoniaklösung auf einen pH-Wert von 6,8 eingestellt ist, im Laufe von 5 min zudosiert. Anschließend werden 10% eines Gemisches aus 8890 Teilen Vinylacetat und 3810 Teilen Vinylchlorid zugegeben, der Äthylendruck wird auf 40 bar erhöht, und nach Zudosierung einer Lösung von 45 Teilen Ammoniumpersulfat in 400 Teilen Wasser wird die Innentemperatur auf 60° C eingestellt. Im Laufe von 6 h werden die restlichen 75% der Lösung (I) und die restlichen 90% des VA/VC-Gemisches zudosiert; der Äthylendruck wird hierbei durch Nachdrücken von Äthylen auf 45 bar gehalten. Dann wird die Äthylenzufuhr beendet; eine Lösung von 15 Teilen Ammoniumpersulfat in 600 Teilen Wasser wird zudosiert, und der Autoklavinhalt wird auf 85° C geheizt. Während des Hochheizens und während der ersten 30 min bei 85° C wird eine Lösung (II) von 120 Teilen Natriumlaurylsulfat und 40 Teilen Tris(phosphonomethyl)-amin in 1170 Teilen Wasser, die mit konzentrierter wäßriger Ammoniaklösung auf einen pH-Wert von 6,8 eingestellt ist, zudosiert, und dann wird das Reaktionsgemisch noch 30 min lang bei 85° C weitergerührt und schließlich unter Rühren auf 30° C abgekühlt.

Man erhält eine feinteilige, niedrigviskose und scherstabile ET/VA/VC-Terpolymer-Dispersion mit einem Feststoffgehalt von 51,1%, einer minimalen Filmbildetemperatur von 7° C, einer Viskosität von 40 mPa · s und einem pH-Wert von 5,0. Der mittlere Durchmesser der Polymerpartikel beträgt 0,169 µm. Das Terpolymer hat einen Äthylengehalt von 12,3% und einen RSV-Wert von 3,42 dl/g. Zur Prüfung der Scherstabilität wird die Dispersion 2 min lang bei einer Rührgeschwindigkeit von 5000 UpM gerührt; hierbei bildet sich kein Koagulat, und der mittlere Partikeldurchmesser bleibt unverändert. Wird eine Probe der Dispersion mit 4% einer 5%igen Eisen(III)-chlorid-Lösung versetzt, so wird letztere entfärbt. Die Dispersion bildet nach Trocknung bei Raumtemperatur einen klaren Film, der bei Benetzung mit Wasser erst nach 12 min undurchsichtig wird.

## Beispiel 2 (Anwendungsbeispiel)

Aus den nachstehend genannten Substanzen wird durch Mischen und zehnminütiges Rühren bei einer Rührgeschwindigkeit von 3000 UpM eine Pigmentpaste hergestellt:

| | |
|---|---|
| Wasser | 320 Teile |
| 10%ige wäßrige Natriumtripolyphosphat-Lösung | 18 Teile |
| Polysiloxan-Entschäumer | 1,4 Teile |
| 25%ige wäßrige Ammoniaklösung | 1,4 Teile |
| Titandioxid | 70 Teile |
| Calciumcarbonat (mittlerer Partikeldurchmesser 1—8 µm) | 310 Teile |
| Calciumcarbonat (mittlerer Partikeldurchmesser 0,5—0,6 µm) | 275 Teile |
| Methylcellulose (Hoeppler-Viskosität der 2%igen wäßrigen Lösung: 30 Pa · s) | 3 Teile |
| Methylcellulose (Hoeppler-Viskosität der 2%igen wäßrigen Lösung: 0,2 Pa · s) | 2 Teile |

190 Teile der Pigmentpaste werden mit 19,55 Teilen der gemäß Beispiel 1 erhaltenen Dispersion homogen vermischt. In das Gemisch werden dann 4,2 Teile eines Kohlenwasserstoffgemisches auf Alkylbenzol-Basis (Alkylbenzole mit mindestens 10 Kohlenstoffatomen; Siedebereich: 161 bis 182° C) eingerührt. Die resultierende Dispersionsfarbe enthält 4,7% ET/VA/VC-Terpolymer.

Mit der Dispersionsfarbe werden Anstriche mit einer Schichtdicke von 200 µm (naß) auf einer schwarz eingefärbten PVC-Folie hergestellt und bei einer Temperatur von 23° C und einer relativen Luftfeuchtigkeit von 50% getrocknet. Die getrockneten Anstriche werden nach 1 Tag bzw. nach 3 Tagen auf ihre Naßscheuerfestigkeit untersucht (vgl. DIN 53 778). Die 1 Tag lang getrockneten

Anstriche sind nach 1116 Doppelbürstenstrichen durchgescheuert, die 3 Tage lang getrockneten Anstriche nach 1602 Doppelbürstenstrichen.

## Beispiele 3 bis 10

Es wird jeweils wie in den Beispielen 1 und 2 beschrieben verfahren, jedoch mit den in Tabelle 1 aufgeführten Abweichungen.

Meß- und Prüfergebnisse sind ebenfalls in Tabelle 1 wiedergegeben.

Die Mengenangaben bedeuten jeweils Gewichtsteile, wenn nicht anders angegeben.

In Beispiel 5 beträgt der pH-Wert der Lösungen (I) und (II) 5,0 anstatt 6,8. In Beispiel 6 enthält die Lösung (I) kein Natriumsulfit.

Tabelle 1

| | Beispiel | | | | | | | |
|---|---|---|---|---|---|---|---|---|
| | 3 | 4 | 5 | 6 | 7 | 8 | 9 | 10 |
| VA-Menge | 7620 | 10 160 | 10 160 | 10 160 | 10 160 | 10 160 | 8890 | 8890 |
| VC-Menge | 5080 | 2540 | 2540 | 2540 | 2540 | 2540 | 3810 | 3810 |
| Polymerisationstemp. (°C) | 60 | 60 | 53 | 53 | 60 | 60 | 60 | 60 |
| Emulgator | NaLS | NaLS | NaLS | NaLS | NaLS | NaLS | NaDBS | NaLS |
| Menge in Lösung (I) | 90 | 120 | 120 | 120 | 120 | 120 | 120 | 120 |
| Menge in Lösung (II) | 60 | 80 | 80 | 80 | 80 | 80 | 80 | 80 |
| Phosphonsäure-Derivat | HEDP | TPMA | TPMA | TPMA | TPMEA | TPMHA | TPMA | TPMA |
| Menge in Lösung (I) | 30 | 60 | 60 | 30 | 60 | 60 | 60 | 60 |
| Menge in Lösung (II) | 20 | 40 | 40 | 20 | 40 | 40 | 40 | 40 |
| Emulgator/Phosphonsäure-Derivat | 3 : 1 | 2 : 1 | 2 : 1 | 4 : 1 | 2 : 1 | 2 : 1 | 2 : 1 | 2 : 1 |
| Feststoffgehalt (%) | 50,7 | 51,8 | 51,1 | 51,4 | 51,1 | 51,4 | 48,2 | 49,7 |
| RSV (dl/g) | 1,17 | 1,77 | 4,1 | 3,7 | 2,12 | – | 2,82 | 2,52 |
| MFT (°C) | 12 | 1 | 4 | 4,5 | 1,5 | – | 3 | 3 |
| Mittlerer Partikeldurchmesser (µm) | 0,270 | 0,212 | 0,235 | 0,173 | 0,192 | 0,256 | 0,176 | 0,187 |
| Doppelbürstenstriche nach | | | | | | | | |
| 1 Tag | 1120 | 3600 | >3000 | 2860 | 2030 | 1866 | 1460 | 2490 |
| 3 Tagen | 1920 | >5000 | 2724 | 2100 | 4785 | 1751 | 1470 | 2330 |

## Beispiel 11

In einem mit Innenthermometer, Rückflußkühler, Gaseinlaß und 2 Tropftrichtern versehenen Rührgefäß werden 500 Teile elektrolytfreies Wasser vorgelegt und mit Stickstoff gespült. 7% einer Lösung (I) von 7,5 Teilen NaLS und 2,5 Teilen TPMA in 200 Teilen Wasser, die mit 20%iger Natronlauge auf einen pH-Wert von 6,8 eingestellt ist, sowie eine Lösung von 0,9 Teilen Ammoniumpersulfat in 20

Teilen Wasser werden zu der Vorlage gegeben. Nach Erhöhung der Innentemperatur auf 60° C werden weitere 53% der Lösung (I) und ein Gemisch aus 600 Teilen Vinylacetat und 150 Teilen eines handelsüblichen Gemisches von Vinylestern tertiärer, gesättigter, aliphatischer Carbonsäuren mit 10 Kohlenstoffatomen im Laufe von 3 h zudosiert. Dann wird eine Lösung von 0,45 Teilen Ammoniumpersulfat in 30 Teilen Wasser zugefügt, und die Innentemperatur wird auf 75° C erhöht. Während des Hochheizens werden die restlichen 40% der Lösung (I) zudosiert, dann wird das Reaktionsgemisch noch 30 min lang bei 75° C weitergerührt und schließlich unter Rühren auf Raumtemperatur abgekühlt.

Man erhält eine feinteilige, niedrigviskose Copolymer-Dispersion mit einem Feststoffgehalt von 50,4%, einer minimalen Filmbildetemperatur von 16° C, einer Viskosität von 30 mPa · s (gemessen nach Epprecht) und einem pH-Wert von 5,2. Der mittlere Durchmesser der Polymerpartikel beträgt 0,215 μm. Das Copolymer hat einen RSV-Wert von 4,38 (gemessen in Dimethylformamid bei 20° C). Wird eine Probe der Dispersion mit 4% einer 5%igen Eisen(III)-chlorid-Lösung versetzt, so wird letztere entfärbt.

Beispiele 12 bis 22

Es wird jeweils wie im Beispiel 11 beschrieben verfahren, jedoch mit den in Tabellen 2 und 3 aufgeführten Abweichungen. In den Beispielen 18 bzw. 19 wird als Neutralisationsmittel konzentrierte Ammoniaklösung bzw. Triäthanolamin anstatt Natronlauge verwendet. Meß- und Prüfergebnisse sind ebenfalls in Tabellen 2 und 3 wiedergegeben.

Tabelle 2

| | Beispiel | | | | | |
|---|---|---|---|---|---|---|
| | 12 | 13 | 14 | 15 | 16 | 17 |
| Emulgator | NaLS | NaLS | NaLS | NaLS | NaDBS | NaDBS |
| Menge | 15 | 10 | 15 | 15 | 7,5 | 15 |
| Phosphonsäure-Derivat | TPMA | TPMA | MDP | HEDP | TPMA | TPMA |
| Menge | 5 | 10 | 5 | 5 | 7,5 | 5 |
| Emulgator / Phosphonsäure-Derivat | 3 : 1 | 1 : 1 | 3 : 1 | 3 : 1 | 3 : 1 | 3 : 1 |
| Feststoffgehalt | 51,8 | 52,0 | 51,8 | 52,0 | 50,9 | 51,9 |
| RSV (dl/g) | 3,98 | 4,98 | 3,19 | 0,6 | 10,5 | 2,84 |
| MFT (°C) | 16 | 16 | 16 | 13 | – | – |
| Mittlerer Partikeldurchmesser (μm) | 0,207 | 0,500 | 0,248 | 0,191 | – | – |

Tabelle 3

| | Beispiel | | | | |
|---|---|---|---|---|---|
| | 18 | 19 | 20 | 21 | 22 |
| Emulgator | NaLS | NaLS | NaLS | NaLS | NaLS |
| Menge | 15 | 15 | 15 | 15 | 15 |
| Phosphonsäure-Derivat | TPMA | TPMA | TPMA | TPMA | TPMA |
| Menge | 5 | 5 | 2,5 | 5 | 7,5 |
| Emulgator / Phosphonsäure-Derivat | 3 : 1 | 3 : 1 | 6 : 1 | 3 :1 | 2 : 1 |
| Feststoffgehalt | 51,8 | 51,9 | 50,0 | 52,0 | 52,3 |
| RSV (dl/g) | – | – | 3,1 | 4,3 | 3,68 |

Beispiele 23 und 24

Es wird jeweils wie in Beispiel 11 beschrieben verfahren, wobei 750 Teile Vinylacetat als alleiniges Monomer verwendet werden; die übrigen Abweichungen sowie die Meß- und Prüfergebnisse sind aus Tabelle 4 ersichtlich.

Tabelle 4

| | Beispiel | |
|---|---|---|
| | 23 | 24 |
| Emulgator | NaLS | NaLS + PPG |
| Menge | 8 | 8 + 9 |
| Phosphonsäure-Derivat | TPMA | TPMA |
| Menge | 2 | 2 |
| Emulgator / Phosphonsäure-Derivat | 4 : 1 | 4 : 1 |
| Neutralisations-mittel | Ammoniak-lösung | Triäthanol-amin |
| Feststoffgehalt (%) | 50,6 | 51,6 |

Beispiel 25

Beispiel 11 wird wiederholt mit einem Monomer-Gemisch aus 375 Teilen Butylacrylat und 375 Teilen Methylmethacrylat. Lösung (I) besteht aus 15 Teilen NaLS und 5 Teilen TPMA. Man erhält eine feinteilige, niedrigviskose Copolymer-Dispersion mit einem Feststoffgehalt von 51,4%, einer minimalen Filmbildetemperatur von 9°C, einer Viskosität von 50 mPa · s und einem pH-Wert von 6,6. Der mittlere Durchmesser der Polymerpartikel beträgt 0,125 μm. Wird eine Probe der Dispersion mit 4% einer 5%igen Eisen(III)-chlorid-Lösung versetzt, so wird letztere entfärbt.

Vergleichsbeispiele A bis D

Es wird wie in den Beispielen 1 und 2 beschrieben verfahren, wobei anstatt des Phosphonsäure-Derivats ein weiteres Comonomer eingesetzt wird. Die übrigen Abweichungen sowie die Meß- und Prüfergebnisse sind aus Tabelle 5 ersichtlich. Die erhaltenen Dispersionen entfärben Eisen(III)-chlorid-Lösung nicht.

Tabelle 5

| | Beispiel | | | |
|---|---|---|---|---|
| | A | B | C | D |
| Emulgator | NaLS | NaLS | NaLS | NaLS |
| Menge in Lösung (I) | 120 | 120 | 120 | 120 |
| Menge in Lösung (II) | 80 | 80 | 80 | 80 |
| Comonomer | Crotonsäure | MMOE | Acrylsäure | Acrylsäure/ Acrylamid |
| Menge in Lösung (I) | 60 | 180 | 60 | 30/30 |
| Menge in Lösung (II) | 40 | 120 | 40 | 20/20 |
| Feststoffgehalt | 45,2 | 48,8 | 50,1 | 50,5 |
| Mittlerer Partikeldurchmesser (μm) | 0,169 | 0,190 | 0,161 | 0,164 |
| Doppelbürstenstriche | | | | |
| nach 1 Tag | 445 | 641 | 880 | 1078 |
| nach 3 Tagen | 585 | 696 | 1096 | 1180 |

**Patentansprüche**

1. Wäßrige Kunststoffdispersion auf Basis von Vinylpolymeren, dadurch gekennzeichnet, daß sie ein wasserlösliches Salz eines mehrbasigen Phosphonsäure-Derivats mit 2, 3 oder 4 Phosphoratomen enthält.

2. Kunststoffdispersion nach Anspruch 1, dadurch gekennzeichnet, daß das Salz ein Ammoniumsalz oder ein Alkalisalz ist.

3. Kunststoffdispersion nach Anspruch 1, dadurch gekennzeichnet, daß das Phosphonsäurederivat ein Diphosphonoalkan oder ein Phosphonomethyl-amin mit 1 oder 2 Stickstoffatomen ist.

4. Kunststoffdispersion nach Anspruch 3, dadurch gekennzeichnet, daß das Diphosphono-alkan eine Verbindung der Formel (I) ist,

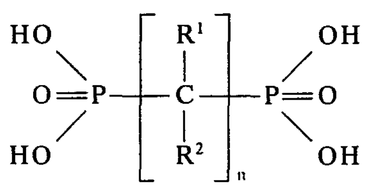

(I)

in der $R^1$ ein Wasserstoffatom oder einen Alkylrest mit 1 bis 8 Kohlenstoffatomen, $R^2$ ein Wasserstoffatom, eine Hydroxylgruppe oder einen Alkylrest mit 1 bis 8 Kohlenstoffatomen und n eine ganze Zahl von 1 bis 10 bedeuten.

5. Kunststoffdispersion nach Anspruch 3, dadurch gekennzeichnet, daß das Phosphonomethyl-amin eine Verbindung der Formel (II) ist,

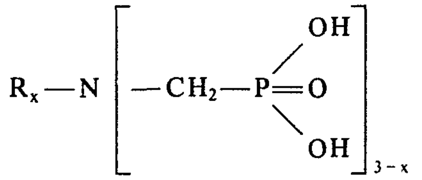

(II)

in der R einen Alkylrest mit 1 bis 12 Kohlenstoffatomen und x Null oder 1 bedeuten.

6. Kunststoffdispersion nach Anspruch 3, dadurch gekennzeichnet, daß das Phosphonomethyl-amin eine Verbindung der Formel (III) ist,

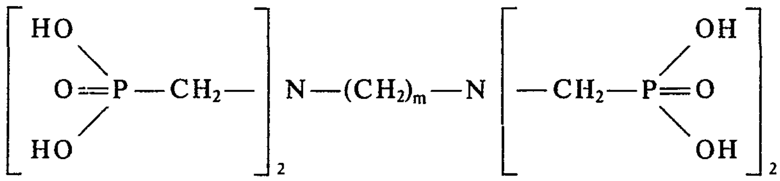

(III)

in der m eine ganze Zahl von 2 bis 14 bedeutet.

7. Verfahren zur Herstellung einer wäßrigen Kunststoffdispersion durch Polymerisieren mindestens eines Vinylmonomers in wäßriger Dispersion in Gegenwart eines Emulgators unter an sich bekannten Bedingungen, dadurch gekennzeichnet, daß die Polymerisation in Gegenwart eines wasserlöslichen Salzes eines mehrbasigen Phosphonsäure-Derivats mit 2, 3 oder 4 Phosphoratomen durchgeführt wird.

8. Verfahren nach Anspruch 7, dadurch gekennzeichnet, daß als Salz ein Ammoniumsalz oder ein Alkalisalz verwendet wird.

9. Verfahren nach Anspruch 7, dadurch gekennzeichnet, daß als Salz eines Phosphonsäure-Derivats ein Salz einer Verbindung der Formel (I), (II) oder (III) verwendet wird.

10. Verwendung der Kunststoffdispersion gemäß Anspruch 1 zum Imprägnieren, Beschichten, Verkleben oder Binden von festen Materialien.

**Claims**

1. Aqueous plastics dispersion on the basis of vinyl polymers, characterized in that it contains a water-soluble salt of a polybasic phosphonic acid derivative having 2 or 3 or 4 phosphorus atoms.

2. Plastics dispersion according to claim 1, wherein the salt is an ammonium or an alkali metal salt.

3. Plastics dispersion according to claim 1, wherein the phosphonic acid derivative is a diphosphono-alkane or a phosphonomethyl amine having 1 or 2 nitrogen atoms.

4. Plastics dispersion according to claim 1, wherein the diphosphono-alkane ist a compound of the formula (I)

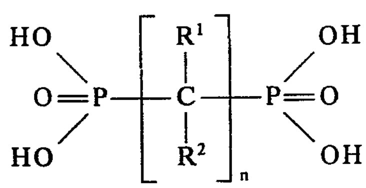

(I)

in which $R^1$ is a hydrogen atom or an alkyl group having from 1 to 8 carbon atoms, $R^2$ is a hydrogen atom, a hydroxy group or an alkyl group having from 1 to 8 carbon atoms and n is an integer from 1 to 10.

5. Plastics dispersion according to claim 3, wherein the phosphonomethyl amine is a compound of the formula (II)

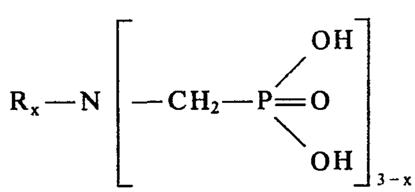

(II)

in which R is an alkyl group having from 1 to 12 carbon atoms and x is zero or 1.

6. Plastics dispersion according to claim 3, wherein the phosphonomethyl amine is a compound of the formula (III)

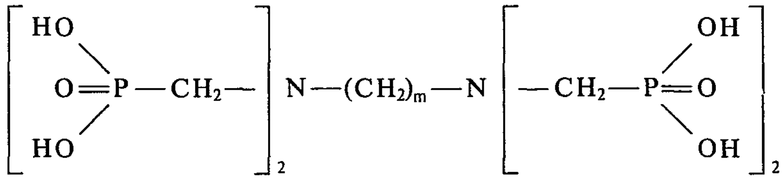

(III)

in which m is an integer from 2 to 14.

7. Process for the manufacture of an aqueous plastics dispersion by polymerizing at least one vinyl monomer in aqueous dispersion in the presence of an emulsifiert under conditions known per se, characterized by carrying out the polymerization in the presence of a water-soluble salt of a polybasic phosphonic acid derivative having 2 or 3 or 4 phosphorus atoms.

8. Process according to claim 7, wherein the salt of the phosphonic acid derivative used is an ammonium salt or an alkali metal salt.

9. Process according to claim 7, wherein the salt of the phosphonic acid derivative is a salt of a compound of the formula (I) or (II) or (III).

10. Method of using the plastics dispersion according to claim 1 for impregnating, coating, glueing or binding solid materials.

**Revendications**

1. Dispersion aqueuse de matière plastique à base de polymères vinyliques, dispersion caractérisée en ce qu'elle contient un sel hydrosuloble d'un dérivé d'acide phosphonique comportant plusieurs groupes acides et contenant 2, 3 ou 4 atomes de phosphore.

2. Dispersion de matière plastique selon la revendication 1, caractérisée en ce que le sel est un sel d'ammonium ou un sel de métal alcalin.

3. Dispersion de matière plastique selon la revendication 1, caractérisée en ce que le dérivé d'acide phosphonique est un diphosphono-alcane ou une phosphonométhyl-amine contenant 1 ou 2 atomes d'azote.

4. Dispersion de matière plastique selon la revendication 3, caractérisée en ce que le diphosphono-alcane est un composé répondant à la formule (I)

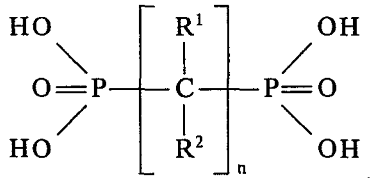

(I)

dans laquelle $R^1$ représente un atome d'hydrogène ou un radical alkyle contenant de 1 à 8 atomes de carbone, $R^2$ un atome d'hydrogène, un groupe hydroxy ou un radical alkyle contenant de 1 à 8 atomes de carbone et n un nombre entier de 1 à 10.

5. Dispersion de matière plastique selon la revendication 3, caractérisée en ce que la phosphonométhyl-amine est un composé répondant à la formule (II)

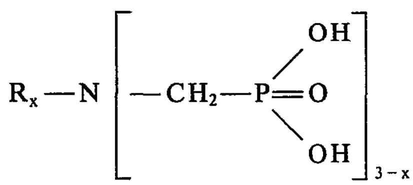

(II)

dans laquelle R représente un radical alkyle contenant de 1 à 12 atomes de carbone et x est égal à 0 ou à 1.

6. Dispersion de matière plastique selon la revendication 3, caractérisée en ce que la phosphonométhyl-amine est un composé répondant à la formule (III)

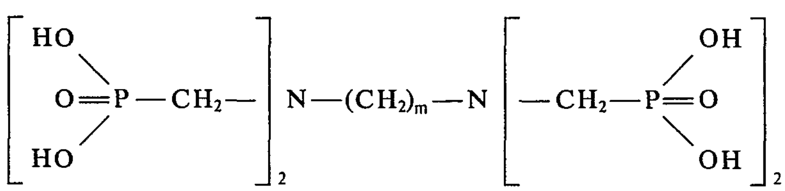

(III)

dans laquelle m est un nombre entier de 2 à 14.

7. Procédé de préparation d'une dispersion aqueuse de matière plastique par polymérisation d'au moins un monomère vinylique, en dispersion aqueuse, en présence d'un émulsionnant, dans des conditions connues, procédé caractérisée en ce qu'on effectue la polymérisation en présence d'un sel hydrosoluble d'un dérivé d'acide phosphonique comportant plusieurs groupes acides et contenant 2, 3 ou 4 atomes de phosphore.

8. Procédé selon la revendication 7 dans lequel on utilise, comme sel, un sel d'ammonium ou un sel de métal alcalin.

9. Procédé selon la revendication 7 caractérisée en ce qu'on utilise, comme sel d'un dérivé d'acide phosphonique, un sel d'un composé de formule (I), (II) ou (III).

10. Application de la dispersion de matière plastique selon la revendication 1 pour imprégner, enduire, coller ou lier des matières solides.